# EUROPEAN PATENT SPECIFICATION

(11) **EP 3 318 941 B1**
(45) Date of publication and mention of the grant of the patent: **29.12.2021**
(21) Application number: 17200073.9
(22) Date of filing: 06.11.2017
(51) Int. Cl.: G05B 19/4063, G06Q 10/06

(54) **INDUSTRIAL AUTOMATION SYSTEM MACHINE ANALYTICS FOR A CONNECTED ENTERPRISE**
MASCHINENANALYTIK FÜR INDUSTRIELLES AUTOMATISIERUNGSSYSTEM FÜR EIN ANGESCHLOSSENES UNTERNEHMEN
ANALYSE DE MACHINE DE SYSTÈME D'AUTOMATISATION INDUSTRIELLE POUR UNE ENTREPRISE CONNECTÉE

(30) Priority: 04.11.2016 US 201662417713 P; 29.09.2017 US 201715720232
(43) Date of publication of application: 09.05.2018
(73) Proprietor: Rockwell Automation Technologies, Inc., Mayfield Heights, OH 44124 (US)
(72) Inventor: RODRIGUEZ, Axel, Aurora, OH 44202 (US); SEGER, Daniel B., Atlanta, GA 30339 (US); PANTALEANO, Michael J., Willoughby, OH 44094 (US); SMITH, Todd M., Chagrin Falls, OH 44022 (US)
(74) Representative: Grünecker Patent- und Rechtsanwälte PartG mbB

(56) References cited:
- US-A1- 2013 211 559
- US-A1- 2014 245 451
- US-A1- 2014 358 256
- US-A1- 2015 316 923

## Description

### TECHNICAL FIELD

Aspects of the disclosure are related to computing hardware and software technology, and in particular to industrial automation applications.

### TECHNICAL BACKGROUND

Industrial controllers and their associated I/O devices are central to the operation of modem automation systems. These controllers interact with field devices on the plant floor to control automated processes relating to such objectives as product manufacture, material handling, batch processing, supervisory control, and other such applications. Industrial controllers store and execute user-defined control programs to effect decision-making in connection with the controlled process. Such programs can include, but are not limited to, ladder logic, sequential function charts, function block diagrams, structured text, or other such programming structures.

Because of the large number of system variables that must be monitored and controlled in near real-time, industrial automation systems often generate vast amounts of near real-time data. In addition to production statistics, data relating to machine health, alarm statuses, operator feedback (e.g., manually entered reason codes associated with a downtime condition), electrical or mechanical load over time, and the like are often monitored, and in some cases recorded, on a continuous basis. This data is generated by the many industrial devices that can make up a given automation system, including the industrial controller and its associated I/O, telemetry devices for near real-time metering, motion control devices (e.g., drives for controlling the motors that make up a motion system), visualization applications, lot traceability systems (e.g., barcode tracking), etc. Moreover, since many industrial facilities operate on a 24-hour basis, their associated automation systems can generate a vast amount of potentially useful data at high rates. For an enterprise with multiple plant facilities, the amount of generated automation data further increases

The large quantity of data generated by modem automation systems makes it possible to apply a broad range of plant analytics to the automation systems and processes that make up an industrial enterprise or business. Reports, charts, and other human-readable formats are often available or may be created for plant personnel and others wishing to monitor and review the generated data in either a real-time mode or at a later time after the data has been stored.

For example, original equipment manufacturers (OEMs) supplying equipment to a factory may want to review and analyze data collected by their equipment in order to troubleshoot, perform maintenance, and improve equipment performance in existing or future models. Traveling to physical plant locations where such equipment is installed is timeconsuming and can lead to mismatched analysis data when such data is collected over an extended period of time. Real-time analysis of equipment located in different physical plants is also difficult to achieve if the data for analysis is collected on-site.

The above-described deficiencies of today's industrial control and business systems are merely intended to provide an overview of some of the problems of conventional systems, and are not intended to be exhaustive. Other problems with conventional systems and corresponding benefits of the various non-limiting embodiments described herein may become further apparent upon review of the following description.

US 2013/211559 A1 discloses cloud-based diagnostic applications that can monitor the health of respective automation systems or their associated industrial devices across an entire plant, or across multiple industrial facilities that make up an enterprise. A gateway interface component can be configured to receive industrial data sent by one or more cloud gateways at respective industrial systems. A client interface component can be configured to deliver pre-configured display screens to remote devices having Internet connectivity, and to render selected subsets of the collected industrial data via the display screens. A context component can be configured to append contextual information to data received by the gateway interface component. An analytics component can be configured to analyze the received industrial data according to predefined criteria. For example, the analytics component 210 can analyzed incoming industrial data substantially in real-time to determine whether a predefined event relating to an industrial system (or an aggregation of disparate industrial systems) has been met, for the purpose of generating and delivering alarm indications or notifications to selected devices.

US 2015/316923 A1 discloses an apparatus that includes a first interface configured to communicate over a first industrial process control network using a first protocol. The apparatus also includes a second interface configured to communicate over a second industrial process control network using a second protocol. The apparatus further includes a third interface configured to communicate with at least one supervisory device over a third network. In addition, the apparatus includes at least one processing device configured to provide concurrent access for the at least one supervisory device to process control devices coupled to the first and second industrial process control networks during a migration of process control devices that use the first protocol to process control devices that use the second protocol.

It is the object of the present invention to provide an improved method and system for industrial automation machine analytics.

The object is achieved by the subject matter of the independent claims.

Embodiments are defined by the dependent claims.

The present invention relates to **one or more computer-readable storage media** according to claim 1.

The present invention further relates to method of generating a dashboard according to claim 8.

The present invention further relates to a system to generate a dashboard according to claim 13.

This Overview is provided to introduce a selection of concepts in a simplified form that are further described below in the Detailed Description. It may be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure can be better understood with reference to the following drawings.
FIG. 1 illustrates a schematic block diagram of plant locations and equipment in an exemplary implementation.
FIG. 2 is a block diagram that illustrates an industrial automation environment in an exemplary implementation.
FIGS. 3A and 3B are block diagrams that illustrate a data analytics system environment in exemplary implementations.
FIG. 4 is a flowchart illustrating a data analytics operation in an exemplary implementation.
FIG.5 illustrates a machine location dashboard in an exemplary implementation.
FIG.6 is a machine analytics dashboard in an exemplary implementation.
FIG.7 is a machine states history dashboard in an exemplary implementation.
FIG.8 is a machine event dashboard in an exemplary implementation.
FIG.9 is a machine trend dashboard in an exemplary implementation.
FIG.10 illustrates a computing system suitable for implementing the software technology disclosed herein, including any of the applications, architectures, elements, processes, and operational scenarios and sequences illustrated in the Figures and discussed below in the Detailed Description.

### DETAILED DESCRIPTION

Before any embodiments are explained in detail, it is to be understood that the embodiments described herein are not limited in their application to the details of construction and the arrangement of components set forth in the following description or illustrated in the following drawings. Embodiments may be practiced or carried out in various ways.

Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "connected" and "coupled" are used broadly and encompass both direct and indirect mounting, connecting, and coupling. Further, "connected" and "coupled" are not restricted to physical or mechanical connections or couplings, and may include electrical connections or couplings, whether direct or indirect. Also, electronic communications and notifications may be performed using any known means including direct or indirect wired connections, wireless connections, and combinations thereof. Also, functionality described as being performed by one device may be distributed among a plurality of devices.

It should also be noted that a plurality of hardware and software based devices, as well as a plurality of different structural components may be used to implement the embodiments set forth herein. In addition, it should be understood that embodiments may include hardware, software, and electronic components that, for purposes of discussion, may be illustrated and described as if the majority of the components were implemented solely in hardware. However, one of ordinary skill in the art, and based on a reading of this detailed description, would recognize that, in at least one embodiment, the electronic-based aspects of the embodiments may be implemented in software (e.g., stored on non-transitory computer-readable medium) executable by one or more electronic processors.

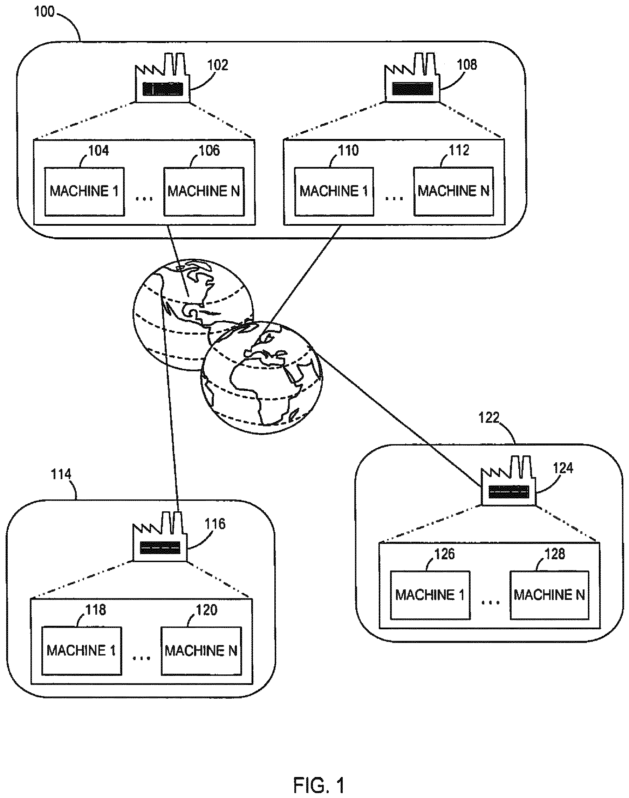

FIG. 1 illustrates schematic block diagram of plant locations and equipment in an exemplary implementation. A first company 100 has a first plant 102 with a number of machines 104, 106 located in North America and a second plant 108 with a number of machines 110, 112 located in Europe. A second company 114 has a plant 116 with a number of machines 118, 120 also located in North America, and a third company 122 with a plant 124 has a number of machines 126, 128 located in Asia. According to embodiments, an OEM that manufactured machines 104, 106, 110, 112, 118, 120 may want to acquire data from the machines in real time or in near real-time in order to analyze the performance, overall equipment effectiveness (OEE), current status, and other attributes of the machines. Such data may then be used by the OEM to analyze performance of the machines.

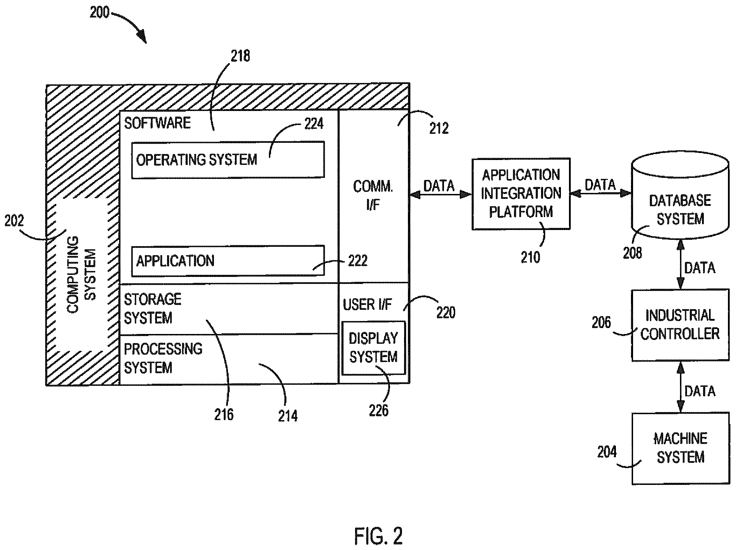

FIG. 2 shows a block diagram that illustrates an industrial automation environment 200 in an exemplary implementation is shown. Industrial automation environment 200 provides an example of an industrial automation environment set up in one or more of plants 102, 106, 116, and 124 that may be utilized to implement the data gathering and presentation operation disclosed herein, but other environments could also be used. Industrial automation environment 200 includes computing system 202, machine system 204, industrial controller 206, database system 208, and application integration platform 210. Machine system 204 and controller 206 are in communication over a communication link, controller 206 and database system 208 communicate over a communication link, database system 208 and application integration platform 210 communicate over a communication link, and application integration platform 210 and computing system 202 are in communication over a communication link. Note that there would typically be many more machine systems in most industrial automation environments as illustrated in FIG. 1, but the number of machine systems shown in Figure 2 has been restricted for clarity.

Industrial automation environment 200 comprises an automobile manufacturing factory, food processing plant, oil drilling operation, microprocessor fabrication facility, or some other type of industrial enterprise. Machine system 204 could comprise a sensor, drive, pump, filter, drill, motor, robot, fabrication machinery, mill, printer, or any other industrial automation equipment, including their associated control systems. Machine system 204 may comprise one or more of machines 104, 106, 110, 112, 118, 120, 126, 128 illustrated in FIG. 1. A control system comprises, for example, industrial controller 206, which could include automation controllers, programmable logic controllers (PLCs), programmable automation controllers (PACs), or any other controllers used in automation control. Additionally, machine system 204 could comprise other industrial equipment, such as a brew kettle in a brewery, a reserve of coal or other resources, or any other element that may reside in an industrial automation environment 200.

Machine system 204 continually produces operational data. This operational data populates a known data structure in controller 206 with data including: current machine state, current event, available time, running time, downtime, good parts produced, scrap parts produced, part count ratios, ideal cycle time, configurable process variables (e.g., temperature, voltage, energy use, etc.), and configurable counters (e.g., material consumed, machine cycles, etc.). Machine system 204 and/or controller 206 is capable of transferring the operational data over a communication link to database system 208, application integration platform 210, and computing system 202, typically via a communication network. Database system 208 could comprise a disk, tape, integrated circuit, server, or some other memory device. Database system 208 may reside in a single device or may be distributed among multiple memory devices.

Application integration platform 210 comprises a processing system and a communication transceiver. Application integration platform 210 may also include other components such as a router, server, data storage system, and power supply. Application integration platform 210 may reside in a single device or may be distributed across multiple devices. Application integration platform 210 may be a discrete system or may be integrated within other systems - including other systems within industrial automation environment 200. In some examples, application integration platform 210 could comprise a FACTORYTALK VANTAGEPOINT server system provided by Rockwell Automation, Inc.

The communication links over which data is exchanged between machine system 204, industrial controller 206, database system 208, application integration platform 210, and communication interface 212 of computing system 202 could use metal, air, space, optical fiber such as glass or plastic, or some other material as the transport medium - including combinations thereof. The communication links could comprise multiple network elements such as routers, gateways, telecommunication switches, servers, processing systems, or other communication equipment and systems for providing communication and data services. These communication links could use various communication protocols, such as TDM, IP, Ethernet, telephony, optical networking, packet networks, wireless mesh networks (WMN), local area networks (LAN), metropolitan area networks (MAN), wide area networks (WAN), hybrid fiber coax (HFC), communication signaling, wireless protocols, communication signaling, peer-to-peer networking over Bluetooth, Bluetooth low energy, Wi-Fi Direct, near field communication (NFC), or some other communication format, including combinations thereof. The communication links could be direct links or may include intermediate networks, systems, or devices.

Computing system 202 may be representative of any computing apparatus, system, or systems on which the event data saving processes disclosed herein or variations thereof may be suitably implemented. Computing system 202 provides an example of a computing system that could be used as either a server or a client device in some implementations, although such devices could have alternative configurations. Examples of computing system 202 include mobile computing devices, such as cell phones, tablet computers, laptop computers, and notebook computers, as well as any other type of mobile computing devices and any combination or variation thereof. Examples of computing system 202 also include desktop computers, server computers, and virtual machines, as well as any other type of computing system, variation, or combination thereof. In some implementations, computing system 202 could comprise a mobile device capable of operating in a server-like fashion which, among other uses, could be utilized in a wireless mesh network.

Computing system 202 includes processing system 214, storage system 216, software 218, communication interface 212, and user interface 220. Processing system 214 is operatively coupled with storage system 216, communication interface 212, and user interface 220. Processing system 214 loads and executes software 218 from storage system 216. Software 218 includes application 222 and operating system 224. Application 222 may include operations appropriate for implementing industrial automation environments in some examples. In this example, user interface 220 includes display system 226, which itself may be part of a touch screen that also accepts user inputs via touches on its surface. Computing system 202 may optionally include additional devices, features, or functionality not discussed here for purposes of brevity.

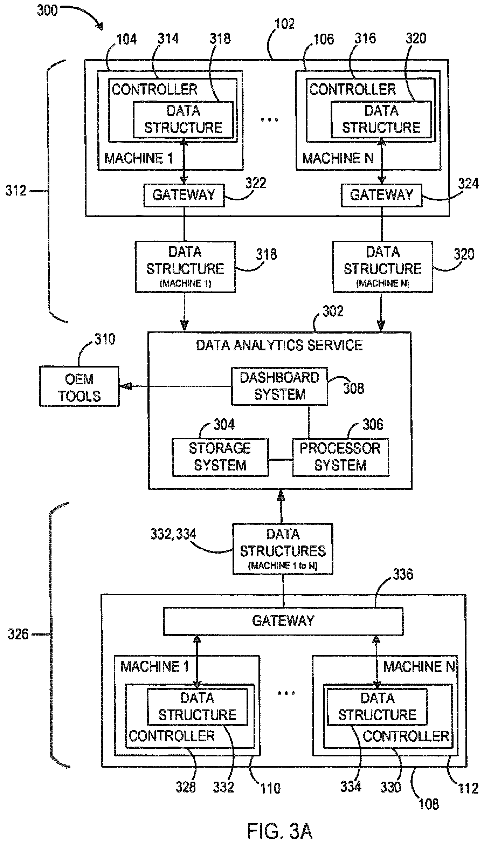

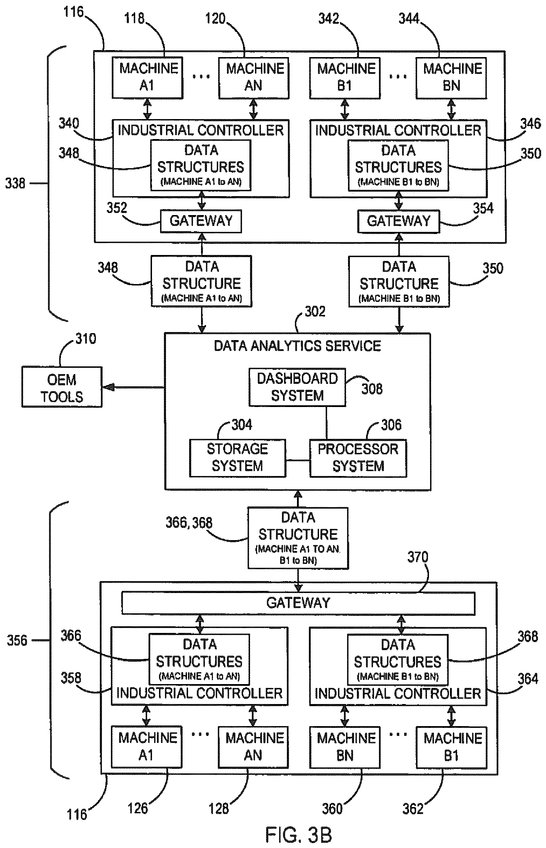

FIGS. 3A and 3B illustrate a data analytics system environment 300 with alternative gateway configurations in exemplary implementations. To facilitate delivery of machine analytics information to machine builders, OEMs, and other machine stakeholders, a data analytics service 302 is configured to receive data gathered from machines and/or machine systems of plants (102, 106, 116, 124) and process, analyze, and present organized data to the machine stakeholders. In one embodiment, data analytics service 302 is a cloud-based system accessible via the Internet or similar communication protocols; however, other types of systems are also contemplated herein.

In response to receiving the gathered data, analytics data service 302 includes an analytics storage system 304 for data storage. Data analytics service 302 includes a processor system 306 configured to organize the data and perform various data analysis methods using the data to prepare the data for display to the machine stakeholders. The processor system 306, since it has access to the data from multiple machines (e.g., machines 104, 106, 110, 112, 118, 120, 126, 128), is able to integrate the data from the different locations where the machines are located and present the data to the machine stakeholders from a single source. The data processed by processor system 306 is accessible by a dashboard system 308 comprising one or more graphical dashboards configured to present the data to the machine stakeholders. The graphical dashboards are accessible by the machine stakeholders using OEM tools 310 such as FACTORYTALK Analytics for Machines software provided by Rockwell Automation, Inc.

Referring to FIG. 3A, in a first gateway environment 312, one example of data transfer to analytics data service 302 is illustrated. In this example, machines 104, 106 of plant 102 include an integrated controller 314, 316. Each controller 314, 316 is configured to generate a predefined data structure 318, 320 populated with specific data. The specific data, in embodiments of the invention, include OEM identifying information, machine state information, actual part production or count information, ideal part production or count information, machine event information, and specific machine variable information. The OEM identifying information identifies the maker or builder of the machine and allows the analytics data service 302 to group or categorize the data for a single OEM together that is separated from the information of other OEMs. In this manner, when the machine OEM accesses the service 302 to view the stored data, only the data for the single OEM is delivered to the OEM dashboard, leaving machine data for other OEMs hidden or unaccessed by the dashboard tools. The OEM identifying information may also identify the particular machine make, model, or type together with other information machine specs. The location of the machine can also be included.

The machine state information includes data identifying a history of the operating states of the machine and the times in which each of the operating states was encountered. This information includes pre-processed calculated information identifying the duration of each of the machine states as part of the data structure to reduce the need for the analytics data service 302 to calculate the information.

The actual part count information includes data indicating how many parts has the particular machine has made over a period or periods of time. The part count information may include both the number of good parts produced as well as the number of bad parts produced. The ideal part count information includes the number of good parts that the machine should have produced during productive states such as, for example, when the machine was in one or more operational states and with adequate supplies to produce parts. The ideal part production or count information may be calculated based on a comparison of the duration of productive machine states with the ideal time it takes to produce a good part in a productive machine state.

The machine event information includes information related to logged events in the machine. Events such as low or inadequate supplies, faults, operation starts and stops, and other flagged and stored events. The specific machine variable information may include the data values for specific variables that are important or of interest to the machine stakeholders and that should be included in at least one of the dahsboards.

The format and configuration of data structures 318, 320 are the same, but the data contained therein is respective to each machine 104, 106. For each machine 104, 106, a respective gateway 322, 324 has access to the data structures 318, 320, and in one embodiment, to only the specific predefined data structures 318, 320. That is, access to other types of data structures or data information not organized according to the format of data structures 318, 320 by gateways 322, 324 is prohibited. Gateways 322, 324 communicate with controllers 314, 316 to obtain their respective data structures 318, 320 and upload the data structures 318, 320 to the data analytics service 302 for storage in the storage system 304. The data structures 318, 320 received or obtained from machines 104, 106 is identical to the data structures 318, 320 transmitted to the analytics data service 302. Accordingly, the data in data structures 318, 320 are not altered by gateways 322, 324. In this manner, regarding the obtained data, gateways 322, 324 (and all gateways described herein) simply facilitate the transfer of data structures 318, 320 from machines 104, 106 to the analytics data service 302. To accomplish this, gateways 322, 324 include the protocols needed to communicate with machines 104, 106 and analytics data service 302 including security protocols, handshaking protocols, and the like. Furthermore, since the format and configuration of data structures 318, 320 are predefined and programmed into the gateway 322, 324 and controllers 314, 316, if a gateway 322, 324 fails to find a data structure 318, 320 in a controller 314, 316, the gateway 322, 324 does not have data to forward on to the analytics data service 302. That is, if the data structure 318, 320 is not populated or constructed by the controller 314, 316, the gateway 322, 324 does not acquire the relevant data parts through investigation of other parameters in the controller 314, 316.

In a second gateway environment 326, another example of data transfer to analytics data service 302 is illustrated. In this example, machines 110, 112 of plant 108 include an integrated controller 328, 330 configured to generate predefined data structures 332, 334 identical in format and configuration as those of data structures 318, 320. While first gateway environment 312 includes a dedicated gateway 322, 324 for each machine 104, 106, second gateway environment 326 includes a single gateway 336 for the plurality of machines 110, 112. Gateway 336 communicates with machines 110, 112 to obtain their respective data structures 318, 320 and upload the data structures 318, 320 to the data analytics service 302 for storage in the storage system 304.

Referring to FIG. 3B, in a third gateway environment 338, another example of data transfer to analytics data service 302 is illustrated. In this example, machines 118, 120 of plant 116 are controlled by a local industrial controller 340 while another plurality of machines 342, 344 is controlled by another local industrial controller 346. Machines 118, 120, 342, 344 are shown to include machines without an integrated controller; however, embodiments of the invention contemplate machines 118, 120, 342, 344 may have integrated controllers such as described above.

In this example, industrial controllers 340, 342 are configured to generate predefined data structures 348, 350 including data acquired from respective machines 118, 120, 342, 344 and data generated during control thereof. Data structures 348, 350 are identical in format and configuration as those of data structures 318, 320, 332, 334 described above. A respective dedicated gateway 352, 354 has access to the data structures 348, 350 as described herein and uploads the unaltered data structures 318, 320 to the data analytics service 302 for storage in the storage system 304.

In a fourth gateway environment 356, another example of data transfer to analytics data service 302 is illustrated. In this example, machines 126, 128 of plant 124 are controlled by a local industrial controller 358 while another plurality of machines 360, 362 is controlled by another local industrial controller 364. Industrial controllers 358, 364 configured to generate predefined data structures 366, 368 identical in format and configuration as those of the other data structures described herein. While third gateway environment 338 includes a dedicated gateway 352, 354 for each industrial controller 340, 346, fourth gateway environment 356 includes a single gateway 370 for the plurality of industrial controllers 358, 364. Gateway 370 communicates with industrial controllers 358, 364 to obtain their respective data structures 366, 368 and upload them to the data analytics service 302 for storage in the storage system 304.

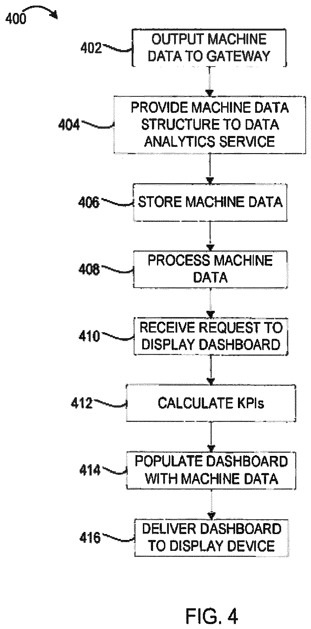

FIG. 4 illustrates a data analytics operation 400 in an exemplary implementation. Operation 400 begins with outputting machine data to a gateway device at step 402. In one embodiment, the gateway device (e.g., gateway 322) requests the machine data from one or more industrial controllers configured to control one or more machines (e.g., machines 104, 106, 110, 112, 118, 120, 126, 128) in an industrial automation environment. In another embodiment, the gateway device receives the data from another point of data streaming in the industrial automation environment such as a database storage system, application integration platform, or the like. The industrial component (e.g., controller, storage, etc.) providing the machine data to the gateway device may, in one embodiment, provide the data according to a predefined data structure to facilitate downstream processing and analysis of the machine data. Alternatively, if the machine data is not output to the gateway according to the predefined data structure, the gateway device itself may be configured to re-organize the machine data into the predefined data structure.

The machine data output to the gateway device is provided, by the gateway device, to a data analysis/analytics service at step 404. While the gateway devices configured to send or output machine data to the data analytics service, the data analytics service and other external applications are prevented from reaching beyond the gateway device into the industrial automation environment in which the machines are located using the gateway device as a router or relay. In this manner, the gateway device provides a firewall to block external requests from accessing or probing the data and other aspects of the industrial automation environment.

In some embodiments, the data acquired from the machine system and populated in the known data structure in of the automation environment includes, for each machine: current machine state, current event, available time, running time, downtime, good parts produced, scrap parts produced, part count ratios, ideal cycle time, configurable process variables (e.g., temperature, voltage, energy use, etc.), and configurable counters (e.g., material consumed, machine cycles, etc.). Properties of this machine information gathered by the gateway device and transmitted to the data analytics service include properties of the machines considered to be informational regarding operation of the machine without divulging information more sensitive to a company's interest who operates the machines. For example, while the data from a packing machine may include the number of successful operations for which the machine was designed (e.g., the number of successful packages created), the actual product within the successful packages may not be discernible therefrom. Accordingly, the machine builder or OEM who supplied the machine to the customer company may be able to analyze the operational data of a machine without knowing specific details regarding the customer company's product operated on or used in the machine's process.

At step 406, the machine data is stored in a memory system such as analytics storage system 304 and joined with other machine data such as customer, location, machine type and model number. The machine data is pre-processed at step 408 to make the raw machine data easier to query and easier to produce the calculations required to populate the dashboards.

The processed data may be stored in analytics storage system 304 until a request is received at step 410 from a machine stakeholder's computing device to display on a display of the computing device one or more dashboards containing the machine's data and the calculated metrics. The machine stakeholder's computing device may include mobile computing devices, such as cell phones, tablet computers, laptop computers, and notebook computers, as well as any other type of mobile computing devices and any combination or variation thereof. In response to the request, the system queries the machine data for the requested machines and requested timeframe. Raw and summarized machine data are used at step 412 to calculate KPIs that appear on the dashboards such as Availability, Performance, Quality, overall equipment effectiveness (OEE), mean time in state (MTIS), mean time out of state (MTOS), actual cycle time, etc. One or more dashboards are populated at step 414 by the dashboard system or processor system with the machine and calculated data corresponding to the information designed to be visually displayed thereon. Following the dashboard population, the dashboard is delivered to the machine stakeholder's display device at step 416.

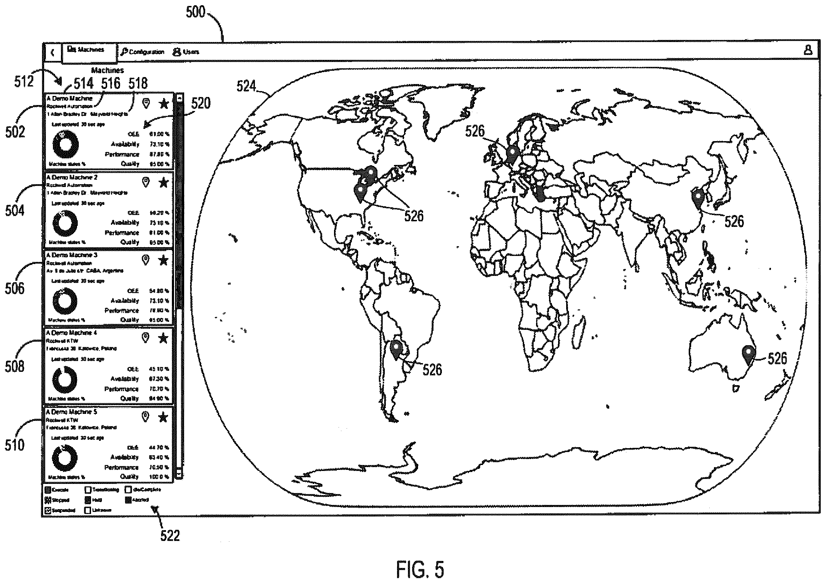

FIG. 5 illustrates a dashboard 500 showing a plurality of machines machine 502-510 in a dashboard machine pane 512. Exemplary machine information illustrated for each machine 502-510 includes the machine's name 514, owner 516, address 518, and some of its metrics data 520 both graphical- and text-based. A legend 522 of machine states provides an explanation of the graphical depiction of metrics data 520.

A geographical or political map 524 displayed in the dashboard 500 includes location markers 526 identifying the geographical location of the machines 502-510. The map 524 allows the machine stakeholder to view the machine locations in context with one another in an example. Differences, similarities, and other comparisons between the machines based on location may be discernible based on dashboard 500.

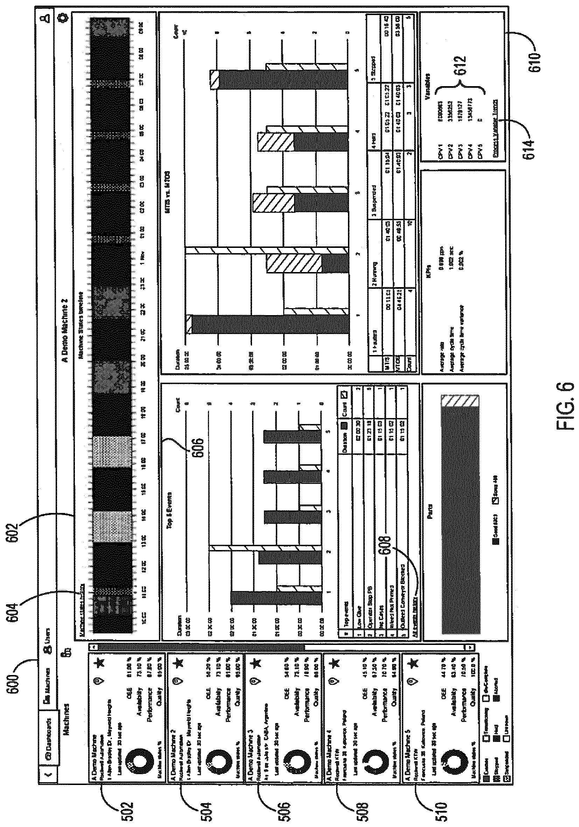

A selection or other user input of one of the machines 502-510 causes a machinespecific dashboard 600 to be illustrated as shown in FIG. 6. As shown in FIG. 6, machinespecific data corresponding with "A Demo Machine 2" (i.e., machine 504) is illustrated in dashboard 600.

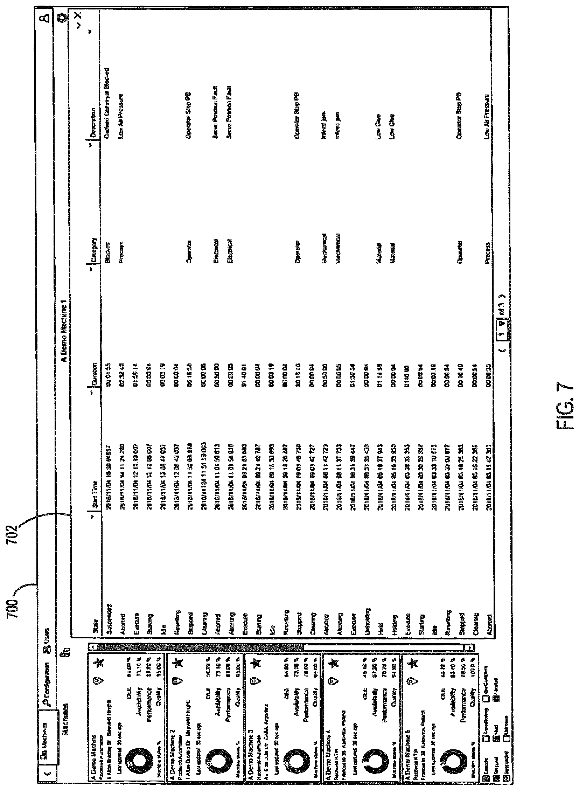

Dashboard 600 may include, in one embodiment, a machine state timeline pane 602 in which the data corresponding with the machine's historical states are shown. In one example, as illustrated, a 24-hour period of machine states may be displayed. Additional machine state history may be illustrated by user-selection of a machine state history link 604, which, referring to FIG. 7, illustrates a state history dashboard 700 for the selected machine (e.g., machine 504). In a state history pane 702, details regarding the operating states for the machine are displayed including the state type, start time, duration, category, and description in one embodiment. However, additional state history data may be displayed in addition to or in an alternative to that shown in state history dashboard 700.

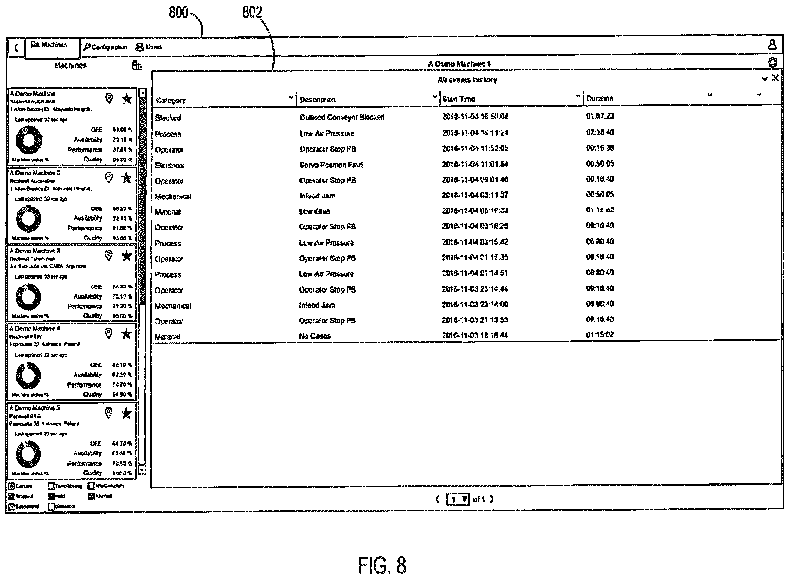

Referring back to FIG. 6, dashboard 600 may also include a machine event pane 606 in which the data corresponding with machine events are shown. In one example, a listing of a top number of occurring events is displayed in graphical and tabular formats. The listing may display the top three events, the top five events, or some other number of top events as space and design allow. Additional machine event history may be illustrated by user-selection of a machine event history link 608, which, referring to FIG. 8, illustrates an event history dashboard 800 for the selected machine. In an event history pane 802, details regarding historical events for the machine are displayed including the event category, description, start time, and duration in one embodiment. However, additional state history data may be displayed in addition to or in an alternative to that shown in event history dashboard 800.

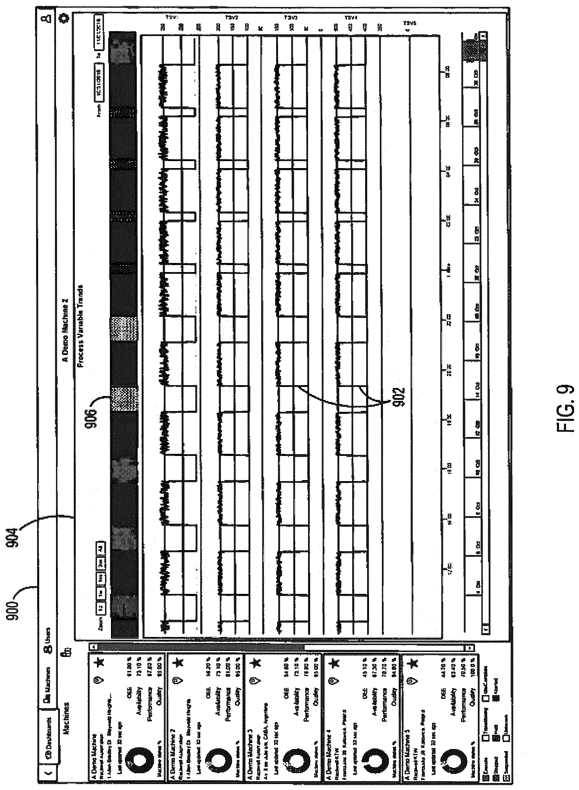

Referring back to FIG. 6, dashboard 600 may also include a machine variables pane 610 in which one or more machine variables 612 together with their corresponding values are shown. In response to the selection of a process variable trends link 614, a trend dashboard 900 as illustrated in FIG. 9 may be displayed in which the trends 902 for one or more process variables (e.g., TSV1, TSV2, TSV3, TSV4, TSV5) are shown in a trend pane 904. Trend pane 904 also includes a graphical representation 906 of the machine states of the selected machine corresponding with the process variable trend data.

Referring back to FIG. 6, dashboard 600 may further include additional data panes illustrating machine system data acquired from the machines or calculated based on the acquired data. For example, as illustrated in FIG. 6, dashboard 600 includes a parts pane 908 that graphically illustrates the number of good parts and bad parts produced by the machine, a KPI pane 910 that displays KPI data, and a MTIS/MTOS pane 912 that displays MTIS and MTOS information calculated from the acquired machine data. Additional machine data acquired from the machines of the machine system 204 may be displayed according to the design of the various dashboards created to display machine information to the computing machines of the machine stakeholders.

In one embodiment, the dashboard designs are predefined and are not configurable by the machine stakeholders via their computing machines. However, feedback regarding dashboard data presentation may be accepted by the operator of the analytics data service 302 from the machine stakeholders to create dashboards helpful to their understanding and analysis of the operation of their machines in the field.

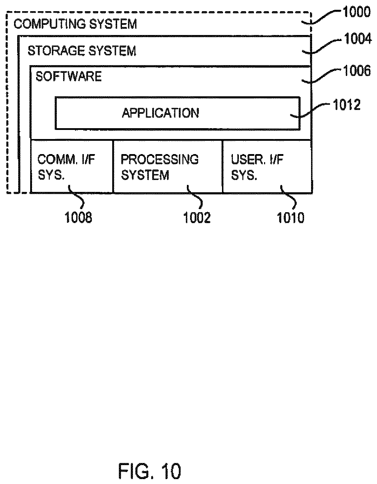

FIG. 10 illustrates a computing system 1000, which is representative of any system or collection of systems in which the various applications, services, scenarios, and processes disclosed herein may be implemented. Examples of computing system 1000 include, but are not limited to, desktop computers, laptop computers, tablet computers, computers having hybrid form-factors, mobile phones, smart televisions, wearable devices, server computers, blade servers, rack servers, and any other type of computing system (or collection thereof) suitable for carrying out the application launching operations described herein. Such systems may employ one or more virtual machines, containers, or any other type of virtual computing resource in the context of supporting enhanced group collaboration.

Computing system 1000 may be implemented as a single apparatus, system, or device or may be implemented in a distributed manner as multiple apparatuses, systems, or devices. Computing system 1000 includes, but is not limited to, processing system 1002, storage system 1004, software 1006, communication interface system 1008, and user interface system 1010. Processing system 1002 is operatively coupled with storage system 1004, communication interface system 1008, and user interface system 1010.

Processing system 1002 loads and executes software 1006 from storage system 1004. Software 1006 includes application 1012, which is representative of a software application executed by a processor and programmed to execute the methods described herein. When executed by processing system 1002 to facilitate and guide pre-booking requests, application 1012 directs processing system 1002 to operate as described herein for at least the various processes, operational scenarios, and sequences discussed in the foregoing implementations. Computing system 1000 may optionally include additional devices, features, or functionality not discussed for purposes of brevity.

Referring still to FIG. 10, processing system 1002 may comprise a micro-processor and other circuitry that retrieves and executes software 1006 from storage system 1004. Processing system 1002 may be implemented within a single processing device, but may also be distributed across multiple processing devices or sub-systems that cooperate in executing program instructions. Examples of processing system 1002 include general purpose central processing units, application specific processors, and logic devices, as well as any other type of processing device, combinations, or variations thereof.

Storage system 1004 may comprise any computer readable storage media readable by processing system 1002 and capable of storing software 1006. Storage system 1 004 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations, storage system 1004 may also include computer readable communication media over which at least some of software 1006 may be communicated internally or externally. Storage system 1004 may be implemented as a single storage device, but may also be implemented across multiple storage devices or sub-systems co-located or distributed relative to each other. Storage system 1004 may comprise additional elements, such as a controller, capable of communicating with processing system 1002 or possibly other systems.

Software 1006 in general, and application 1012 in particular, may be implemented in program instructions and among other functions may, when executed by processing system 1002, direct processing system 1002 to operate as described with respect to the various operational scenarios, sequences, and processes illustrated herein. For example, application 1012 may include program instructions for facilitating service provider booking procedures such at that described in method 400.

In particular, the program instructions may include various components or modules that cooperate or otherwise interact to carry out the various processes and operational scenarios described herein. The various components or modules may be embodied in compiled or interpreted instructions, or in some other variation or combination of instructions. Software 1006 may include additional processes, programs, or components, such as operating system software, virtual machine software, or other application software, in addition to or that include application 1012. Software 1006 may also comprise firmware or some other form of machine-readable processing instructions executable by processing system 1002.

In general, application 1012 may, when loaded into processing system 1002 and executed, transform a suitable apparatus, system, or device (of which computing system 1000 is representative) overall from a general-purpose computing system into a special-purpose computing system customized to enhance entity classification operations. Indeed, encoding application 1012 on storage system 1004 may transform the physical structure of storage system 1004. The specific transformation of the physical structure may depend on various factors in different implementations of this description. Examples of such factors may include, but are not limited to, the technology used to implement the storage media of storage system 1004 and whether the computer-storage media are characterized as primary or secondary storage, as well as other factors.

For example, if the computer readable storage media are implemented as semiconductor-based memory, application 1012 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 1008 may include communication connections and devices that allow for communication with other computing systems (not shown) over communication networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

User interface system 1010 may include a keyboard, a mouse, a voice input device, a touch input device for receiving a touch gesture from a user, a motion input device for detecting non-touch gestures and other motions by a user, and other comparable input devices and associated processing elements capable of receiving user input from a user. Output devices such as a display, speakers, haptic devices, and other types of output devices may also be included in user interface system 1010. In some cases, the input and output devices may be combined in a single device, such as a display capable of displaying images and receiving touch gestures. The aforementioned user input and output devices are well known in the art and need not be discussed at length here.

User interface system 1010 may also include associated user interface software executable by processing system 1002 in support of the various user input and output devices discussed above. Separately or in conjunction with each other and other hardware and software elements, the user interface software and user interface devices may support a graphical user interface, a natural user interface, or any other type of user interface, in which a user interface to an application may be presented.

Communication between computing system 1000 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses, computing backplanes, or any other type of network, combination of network, or variation thereof. The aforementioned communication networks and protocols are well-known and need not be discussed at length here. In any of the aforementioned examples in which data, content, or any other type of information is exchanged, the exchange of information may occur in accordance with any of a variety of well-known data transfer protocols.

The functional block diagrams, operational scenarios and sequences, and flow diagrams provided in the Figures are representative of exemplary systems, environments, and methodologies for performing novel aspects of the disclosure. While, for purposes of simplicity of explanation, methods included herein may be in the form of a functional diagram, operational scenario or sequence, or flow diagram, and may be described as a series of acts, it is to be understood and appreciated that the methods are not limited by the order of acts, as some acts may, in accordance therewith, occur in a different order and/or concurrently with other acts from that shown and described herein. For example, those skilled in the art will understand and appreciate that a method could alternatively be represented as a series of interrelated states or events, such as in a state diagram. Moreover, not all acts illustrated in a methodology may be required for a novel implementation.

The descriptions and figures included herein depict specific implementations to teach those skilled in the art how to make and use the best option. For the purpose of teaching inventive principles, some conventional aspects have been simplified or omitted. Those skilled in the art will appreciate variations from these implementations that fall within the scope of the invention. Those skilled in the art will also appreciate that the features described above can be combined in various ways to form multiple implementations. As a result, the invention is not limited to the specific implementations described above, but only by the claims.

## Claims

1. One or more computer-readable storage media having program instructions stored thereon, wherein the program instructions, when executed by a computing system (302), direct the computing system to:
receive (406) a set of machine data (318, 320, 332, 334) from a gateway device (322, 344, 336) in an industrial automation environment (312, 326), the set of machine data comprising operation data of a plurality of industrial automation machines (104, 106, 110, 112) controlled by at least one controller (314, 316, 328, 334) of the industrial automation environment, wherein the set of machine data conforms to a predefined data format and comprises:
original equipment manufacturer, OEM, identifying information;
machine state information identifying:
at least one operating state of the industrial automation machine; and
a respective duration of the at least one operating state; and
ideal production information identifying a number of parts the industrial automation machine should have produced during one or more productive machine states of the at least one operating state of the industrial automation machine;
group or categorize the machine data for each OEM together using the OEM identifying information;
receive (410) a request from an OEM to display a dashboard;
generate (412) metrics data (520) based on the set of machine data associated with the OEM;
store the metrics data in a computer readable storage medium;
generate (414) a data dashboard (500; 600) based on the stored metrics data; and
deliver the data dashboard to a display device of a device configured to communicate with the computing system, wherein the data dashboard is accessible by the OEM using OEM tools (310).

2. The one or more computer-readable storage media of claim 1, wherein the program instructions that direct the computing system to receive the set of machine data from the gateway device in the industrial automation environment, direct the computing system to receive a first set of machine data (332) corresponding with a first machine (110) of a first industrial automation environment (326) from a first gateway device (336); and
wherein the program instructions further direct the computing system to receive a second set of machine data (334) corresponding with a second machine (112) of the first industrial automation environment from the first gateway device.

3. The one or more computer-readable storage media of claim 2, wherein the program instructions further direct the computing system to receive a third set of machine data (318) corresponding with a first machine (104) of a second industrial automation environment (312) from a second gateway device (318); and
wherein the first industrial automation environment is located in a geographic location distinct from a geographic location of the second industrial automation environment.

4. The one or more computer-readable storage media of claim 3, wherein the program instructions further direct the computing system to generate a location dashboard (500) configured to display the geographic locations (526) of the first and second industrial automation environments on a map (524).

5. The one or more computer-readable storage media of one of claims 1 to 4, wherein the program instructions that direct the computing system to generate a data dashboard based on the stored metrics data direct the computing system to generate the data dashboard comprising:
a machine state timeline pane (602) comprising a history of machine operating states;
a machine event pane (606) comprising a history of machine events; and
a machine variable pane (610) comprising a plurality of machine variable identifiers (612) with corresponding variable values.

6. The one or more computer-readable storage media of one of claims 1 to 5, wherein the set of machine data comprises machine data organized according to a predefined data structure.

7. The one or more computer-readable storage media of one of claims 1 to 6, wherein the program instructions that direct the computing system to generate metrics data direct the computing system to:
determine a machine availability metric based on an operational run time of the industrial automation machine;
determine a machine performance metric based on a cycle time of the industrial automation machine; and
determine a machine quality metric based on a comparison of a number of good parts produced by the industrial automation machine with a number of bad parts produced by the industrial automation machine; and/or
wherein the program instructions further direct the computing system to calculate an overall equipment effectiveness of the industrial automation machine based on the machine availability metric, the machine performance metric, and the machine quality metric.

8. A method of generating a dashboard (500; 600) comprising machine data of an industrial automation machine (104, 106, 110, 112) in an industrial automation environment (312, 326), the method comprising:
receiving (406) a set of machine data (318, 320, 332, 334) from a gateway device (322, 324, 336) in an industrial automation environment (312, 326), the machine data comprising operation data of an industrial automation machine (104, 106, 110, 112) controlled by at least one controller (314, 316, 328, 330) of the industrial automation environment, wherein the set of machine data conforms to a predefined data format and comprises:
original equipment manufacturer, OEM, identifying information;
machine state information identifying:
at least one operating state of the industrial automation machine; and
a respective duration of the at least one operating state; and
ideal production information identifying a number of parts the industrial automation machine should have produced during one or more productive machine states of the at least one operating state of the industrial automation machine;
grouping or categorizing the machine data for each OEM together using the OEM identifying information;
receiving (410) a request from an OEM to display a dashboard;
generating (412) a plurality of metrics data based on the machine data associated with the OEM;
storing the plurality of metrics data in a computer readable storage medium;
generating (414) a data dashboard (500; 600) based on the stored plurality of metrics data; and
delivering the data dashboard to a display device of a device, wherein the data dashboard is accessible by the OEM using OEM tools (310).

9. The method of claim 8, wherein receiving the set of machine data from the gateway device in the industrial automation environment comprises receiving a first set (332) of machine data corresponding with a first machine (110) of a first industrial automation environment (326) from a first gateway device (336); and
further comprising receiving a second set of machine data (334) corresponding with a second machine (112) of the first industrial automation environment from the first gateway device.

10. The method of claim 9 further comprising receiving a third set of machine data (318) corresponding with a first machine (104) of a second industrial automation environment (312) from a second gateway device (322); and
wherein the first industrial automation environment is located in a geographic location distinct from a geographic location of the second industrial automation environment; and/or
further comprising generating a location dashboard (500) configured to display the geographic locations (526) of the first and second industrial automation environments on a map (524).

11. The method of one of claims 8 to 10, wherein generating the data dashboard based on the stored plurality of metrics data comprises generating the data dashboard comprising:
a machine state timeline pane (604) comprising a history of machine operating states;
a machine event pane (606) comprising a history of machine events; and
a machine variable pane (610) comprising a plurality of machine variable identifiers (612) with corresponding variable values.

12. The method of claim 8 to 11, wherein the set of machine data comprises machine data organized according to a predefined data structure.

13. A system to generate a dashboard comprising machine data of an industrial automation machine system in an industrial automation environment, the system comprising:
a computing system (302) of an analytics data service;
a gateway device (322, 324, 336) configured to:
acquire (402) machine data generated by the industrial automation machine system (104, 106, 110, 112), wherein the machine data conforms to a predefined data format and comprises:
original equipment manufacturer, OEM, identifying information;
machine state information identifying:
at least one operating state of the industrial automation machine system; and
a respective duration of the at least one operating state; and
ideal production information identifying a number of parts the industrial automation machine system should have produced during one or more productive machine states of the at least one operating state of the industrial automation machine system;
transmit (404) the machine data to the computing system; and
wherein the computing system comprises:
a computer readable storage medium (304) configured to store the machine data;
a processor system (306) configured to:
group or categorize the machine data for each OEM together using the OEM identifying information;
receive (410) a request from an OEM to display a dashboard;
generate (412) a plurality of metrics data based on the machine data data associated with the OEM; and
store the metrics data in the computer readable storage medium; and
a dashboard system (308) configured to:
generate (414) a data dashboard (500; 600) based on the stored metrics data; and
deliver (416) the data dashboard to a display device of a device requesting the data dashboard from the computing system, wherein the data dashboard is accessible by the OEM using OEM tools (310).

14. The system of claim 13, wherein the gateway device is further configured to organize the acquired machine data based on a predefined data structure prior to transmitting the machine data to the computing system; or
wherein the gateway device is further configured to acquire the machine data from an industrial controller (314, 316, 328, 330) of the industrial automation environment configured to control the industrial automation machine system; or
wherein the gateway device is further configured to provide firewall services to block external access to the industrial automation environment.

15. The system of claim 13 or 14, wherein, for a machine within the industrial automation machine system, the data dashboard comprises:
a machine state timeline pane (604) comprising a history of operating states of the machine;
a machine event pane (606) comprising a history of events of the machine; and
a machine variable pane (610) comprising a plurality of variable identifiers (612) with corresponding variable values of the machine; and/or
wherein the processor system is further configured to calculate an overall equipment effectiveness of the machine based on:
an operational run time of the machine;
a cycle time of the machine; and
a comparison of a number of good parts produced by the machine with a number of bad parts produced by the machine.

## Patentansprüche

1. Ein oder mehrere computerlesbare Speichermedien mit darauf gespeicherten Programmanweisungen, wobei die Programmanweisungen, wenn sie von einem Computersystem (302) ausgeführt werden, das Computersystem anweisen für das:
Empfangen (406) eines Satzes von Maschinendaten (318, 320, 332, 334) von einer Gateway-Vorrichtung (322, 344, 336) in einer industriellen Automatisierungsumgebung (312, 326), wobei der Satz von Maschinendaten Betriebsdaten einer Vielzahl von industriellen Automatisierungsmaschinen (104, 106, 110, 112) umfasst, die von wenigstens einer Steuereinheit (314, 316, 328, 334) der industriellen Automatisierungsumgebung gesteuert werden, wobei der Satz von Maschinendaten einem vordefinierten Datenformat entspricht und umfasst:
Informationen zur Identifizierung des Originalgeräteherstellers (OEM);
Maschinenzustandsinformationen, die identifizieren:
wenigstens einen Betriebszustand der industriellen Automatisierungsmaschine; und
eine entsprechende Dauer des wenigstens einen Betriebszustands; und
Informationen bezüglich idealer Produktion, die eine Anzahl von Teilen angeben, die die industrielle Automatisierungsmaschine während eines oder mehrerer produktiver Maschinenzustände des wenigstens einen Betriebszustands der industriellen Automatisierungsmaschine produziert haben sollte;
Gruppieren oder Kategorisieren der Maschinendaten für jeden OEM anhand der OEM-Identifizierungsinformationen;
Empfangen (410) einer Anforderung von einem OEM, ein Dashboard anzuzeigen;
Erzeugen (412) von Metrikdaten (520) auf der Grundlage des Satzes von Maschinendaten, die dem OEM zugeordnet sind;
Speichern der Metrikdaten in einem computerlesbaren Speichermedium;
Erzeugen (414) eines Daten-Dashboards (500; 600) auf der Grundlage der gespeicherten Metrikdaten; und
Zustellen des Daten-Dashboards an eine Anzeigevorrichtung einer Vorrichtung, die zur Kommunikation mit dem Computersystem eingerichtet ist, wobei das Daten-Dashboard für den OEM unter Verwendung von OEM-Werkzeugen (310) zugänglich ist.

2. Ein oder mehrere computerlesbare Speichermedien nach Anspruch 1, bei denen die Programmanweisungen, die das Computersystem anweisen, den Satz von Maschinendaten von der Gateway-Vorrichtung in der industriellen Automatisierungsumgebung zu empfangen, das Computersystem anweisen, einen ersten Satz von Maschinendaten (332), der einer ersten Maschine (110) einer ersten industriellen Automatisierungsumgebung (326) entspricht, von einer ersten Gateway-Vorrichtung (336) zu empfangen; und
die Programmanweisungen weiterhin das Computersystem anweisen, einen zweiten Satz von Maschinendaten (334), die einer zweiten Maschine (112) der ersten industriellen Automatisierungsumgebung entsprechen, von der ersten Gateway-Vorrichtung zu empfangen.

3. Ein oder mehrere computerlesbare Speichermedien nach Anspruch 2, bei denen die Programmanweisungen das Computersystem weiterhin anweisen, einen dritten Satz von Maschinendaten (318), die einer ersten Maschine (104) einer zweiten industriellen Automatisierungsumgebung (312) entsprechen, von einer zweiten Gateway-Vorrichtung (318) zu empfangen; und
sich die erste industrielle Automatisierungsumgebung an einem geografischen Standort befindet, der sich von einem geografischen Standort der zweiten industriellen Automatisierungsumgebung unterscheidet.

4. Ein oder mehrere computerlesbare Speichermedien nach Anspruch 3, bei denen die Programmanweisungen das Computersystem weiterhin anweisen, ein Standort-Dashboard (500) zu erzeugen, das derart eingerichtet ist, dass es die geografischen Standorte (526) der ersten und zweiten industriellen Automatisierungsumgebung auf einer Karte (524) anzeigt.

5. Ein oder mehrere computerlesbare Speichermedien nach einem der Ansprüche 1 bis 4, bei denen die Programmanweisungen, die das Computersystem anweisen, ein Daten-Dashboard auf der Grundlage der gespeicherten Metrikdaten zu erzeugen, das Computersystem anweisen, das Daten-Dashboard zu erzeugen, das Folgendes umfasst:
ein Maschinenzustands-Zeitleistenfenster (602), das eine Historie der Maschinenbetriebszustände enthält;
ein Maschinenereignisfenster (606), das eine Historie der Maschinenereignisse enthält; und
ein Maschinenvariablenfenster (610), das eine Vielzahl von Maschinenvariablen-Kennungen (612) mit entsprechenden Variablenwerten umfasst.

6. Ein oder mehrere computerlesbare Speichermedien nach einem der Ansprüche 1 bis 5, bei denen der Satz von Maschinendaten Maschinendaten umfasst, die gemäß einer vordefinierten Datenstruktur organisiert sind.

7. Ein oder mehrere computerlesbare Speichermedien nach einem der Ansprüche 1 bis 6, bei denen die Programmanweisungen, die das Computersystem anweisen, Metrikdaten zu erzeugen, das Computersystem anweisen für das:
Bestimmen einer Maschinenverfügbarkeitsmetrik auf der Grundlage einer Betriebslaufzeit der industriellen Automatisierungsmaschine;
Bestimmen einer Maschinenleistungsmetrik auf der Grundlage einer Zykluszeit der industriellen Automatisierungsmaschine; und
Bestimmen einer Maschinenqualitätsmetrik basierend auf einem Vergleich einer Anzahl von guten Teilen, die von der industriellen Automatisierungsmaschine produziert wurden, mit einer Anzahl von schlechten Teilen, die von der industriellen Automatisierungsmaschine produziert wurden; und/oder
wobei die Programmanweisungen das Computersystem weiterhin anweisen, eine Gesamtanlageneffektivität der industriellen Automatisierungsmaschine auf der Grundlage der Maschinenverfügbarkeitsmetrik, der Maschinenleistungsmetrik und der Maschinenqualitätsmetrik zu berechnen.

8. Verfahren zum Erzeugen eines Dashboards (500; 600), das Maschinendaten einer industriellen Automatisierungsmaschine (104, 106, 110, 112) in einer industriellen Automatisierungsumgebung (312, 326) umfasst, wobei das Verfahren Folgendes umfasst:
Empfangen (406) eines Satzes von Maschinendaten (318, 320, 332, 334) von einer Gateway-Vorrichtung (322, 324, 336) in einer industriellen Automatisierungsumgebung (312, 326), wobei die Maschinendaten Betriebsdaten einer industriellen Automatisierungsmaschine (104, 106, 110, 112) umfassen, die von wenigstens einer Steuereinheit (314, 316, 328, 330) der industriellen Automatisierungsumgebung gesteuert wird, wobei der Satz von Maschinendaten mit einem vordefinierten Datenformat übereinstimmt und umfasst:
Informationen zur Identifizierung des Originalgeräteherstellers (OEM);
Maschinenzustandsinformationen, die identifizieren:
wenigstens einen Betriebszustand der industriellen Automatisierungsmaschine;
und eine entsprechende Dauer des wenigstens einen Betriebszustands; und
Informationen bezüglich idealer Produktion, die eine Anzahl von Teilen angeben, die die industrielle Automatisierungsmaschine während eines oder mehrerer produktiver Maschinenzustände des wenigstens einen Betriebszustands der industriellen Automatisierungsmaschine produziert haben sollte;
Gruppieren oder Kategorisieren der Maschinendaten für jeden OEM anhand der OEM-Identifizierungsinformationen;
Empfangen (410) einer Anforderung von einem OEM, ein Dashboard anzuzeigen;
Erzeugen (412) einer Vielzahl von Metrikdaten auf der Grundlage von Maschinendaten, die dem OEM zugeordnet sind;
Speichern der Vielzahl von Metrikdaten in einem computerlesbaren Speichermedium;
Erzeugen (414) eines Daten-Dashboards (500; 600) auf der Grundlage der gespeicherten Metrikdaten; und
Zustellen des Daten-Dashboards an eine Anzeigevorrichtung einer Vorrichtung, wobei das Daten-Dashboard für den OEM unter Verwendung von OEM-Werkzeugen (310) zugänglich ist.

9. Verfahren nach Anspruch 8, bei dem das Empfangen des Satzes von Maschinendaten von der Gateway-Vorrichtung in der industriellen Automatisierungsumgebung das Empfangen eines ersten Satzes (332) von Maschinendaten, die einer ersten Maschine (110) einer ersten industriellen Automatisierungsumgebung (326) entsprechen, von einer ersten Gateway-Vorrichtung (336) umfasst; und
weiterhin umfassend das Empfangen eines zweiten Satzes (334) von Maschinendaten, die einer zweiten Maschine (112) der ersten industriellen Automatisierungsumgebung entsprechen, von der ersten Gateway-Vorrichtung.

10. Verfahren nach Anspruch 9, weiterhin umfassend das Empfangen eines dritten Satzes (318) von Maschinendaten, die einer ersten Maschine (104) einer zweiten industriellen Automatisierungsumgebung (312) entsprechen, von einer zweiten Gateway-Vorrichtung (322);
wobei sich die erste industrielle Automatisierungsumgebung an einem geografischen Standort befindet, der sich von einem geografischen Standort der zweiten industriellen Automatisierungsumgebung unterscheidet; und/oder
weiterhin umfassend das Erzeugen eines Standort-Dashboards (500), das derart eingerichtet ist, dass es die geografischen Standorte (526) der ersten und zweiten industriellen Automatisierungsumgebungen auf einer Karte (524) anzeigt.

11. Verfahren nach einem der Ansprüche 8 bis 10, bei dem das Erzeugen des Daten-Dashboards auf der Grundlage der gespeicherten Vielzahl von Metrikdaten das Erzeugen des Daten-Dashboards beinhaltet, umfassend:
ein Maschinenzustands-Zeitleistenfenster (602), das eine Historie der Maschinenbetriebszustände enthält;
ein Maschinenereignisfenster (606), das eine Historie der Maschinenereignisse enthält; und
ein Maschinenvariablenfenster (610), das eine Vielzahl von Maschinenvariablen-Kennungen (612) mit entsprechenden Variablenwerten umfasst.

12. Verfahren nach Anspruch 8 bis 11, bei dem der Maschinendatensatz Maschinendaten umfasst, die gemäß einer vordefinierten Datenstruktur organisiert sind.

13. System zum Erzeugen eines Dashboards mit Maschinendaten eines industriellen Automatisierungsmaschinensystems in einer industriellen Automatisierungsumgebung, wobei das System umfasst:
ein Computersystem (302) eines Analysedatendienstes;
eine Gateway-Vorrichtung (322, 324, 336), die eingerichtet ist für das:
Erfassen (402) von Maschinendaten, die von dem industriellen Automatisierungsmaschinensystem (104, 106, 110, 112) erzeugt werden, wobei die Maschinendaten einem vordefinierten Datenformat entsprechen und umfassen:
Informationen zur Identifizierung des Originalgeräteherstellers (OEM);
Maschinenzustandsinformationen, die identifizieren:
wenigstens einen Betriebszustand des industriellen Automatisierungsmaschinensystems;
und eine entsprechende Dauer des wenigstens einen Betriebszustands; und
Informationen bezüglich idealer Produktion, die eine Anzahl von Teilen angeben, die das industrielle Automatisierungsmaschinensystem während eines oder mehrerer produktiver Maschinenzustände des wenigstens einen Betriebszustands des industriellen Automatisierungsmaschinensystems produziert haben sollte;
Senden (404) der Maschinendaten an das Computersystem;
wobei das Computersystem umfasst:
ein computerlesbares Speichermedium (304), das zum Speichern der Maschinendaten eingerichtet ist;
ein Prozessorsystem (306), das eingerichtet ist für das:
Gruppieren oder Kategorisieren der Maschinendaten für jeden OEM anhand der OEM-Identifizierungsinformationen;
Empfangen einer Anforderung von einem OEM (410), ein Dashboard anzuzeigen;
Erzeugen (412) einer Vielzahl von Metrikdaten auf der Grundlage der dem OEM zugeordneten Maschinendaten; und
Speichern der Metrikdaten in dem computerlesbaren Speichermedium; und ein Dashboard-System (308), das eingerichtet ist für das:
Erzeugen (414) eines Daten-Dashboards (500; 600) auf der Grundlage der gespeicherten Metrikdaten; und
Zustellen (416) des Daten-Dashboards an eine Anzeigevorrichtung einer Vorrichtung, die das Daten-Dashboard von dem Computersystem anfordert, wobei das Daten-Dashboard für den OEM unter Verwendung von OEM-Tools (310) zugänglich ist.

14. System nach Anspruch 13, bei dem die Gateway-Vorrichtung weiterhin derart eingerichtet ist, dass sie die erfassten Maschinendaten auf der Grundlage einer vordefinierten Datenstruktur organisiert, bevor sie die Maschinendaten an das Computersystem sendet; oder
die Gateway-Vorrichtung weiterhin dazu eingerichtet ist, die Maschinendaten von einer industriellen Steuereinheit (314, 316, 328, 330) der industriellen Automatisierungsumgebung zu erfassen, die derart eingerichtet ist, dass sie das industrielle Automatisierungsmaschinensystem steuert; oder
die Gateway-Vorrichtung weiterhin derart eingerichtet ist, dass sie Firewall-Dienste bereitstellt, um den externen Zugriff auf die industrielle Automatisierungsumgebung zu blockieren.

15. System nach Anspruch 13 oder 14, bei dem für eine Maschine innerhalb des industriellen Automatisierungsmaschinensystems das Daten-Dashboard umfasst:
ein Maschinenzustands-Zeitleistenfenster (602), das eine Historie der Maschinenbetriebszustände enthält;
ein Maschinenereignisfenster (606), das eine Historie der Maschinenereignisse enthält; und
ein Maschinenvariablenfenster (610), das eine Vielzahl von Variablenkennungen (612) mit entsprechenden Variablenwerten der Maschine umfasst; und/oder
das Prozessorsystem weiterhin derart eingerichtet ist, dass es eine Gesamtanlageneffektivität der Maschine berechnet, basierend auf:
einer Betriebslaufzeit der Maschine;
einer Zykluszeit der Maschine; und
einem Vergleich einer Anzahl von guten Teilen, die von der Maschine produziert wurden, mit einer Anzahl von schlechten Teilen, die von der Maschine produziert wurden.

## Revendications

1. Un ou plusieurs support(s) de stockage lisible(s) par ordinateur sur lequel/lesquels sont stockées des instructions de programme, dans lequel/lesquels les instructions de programme, lorsqu'elles sont exécutées par un système informatique (302), ordonnent au système informatique de :
recevoir (406) un ensemble de données de machine (318, 320, 332, 334) à partir d'un dispositif passerelle (322, 344, 336) dans un environnement d'automatisation industrielle (312, 326), l'ensemble de données de machine comprenant des données de fonctionnement d'une pluralité de machines d'automatisation industrielle (104, 106, 110, 112) contrôlées par au moins un contrôleur (314, 316, 328, 334) de l'environnement d'automatisation industrielle,où l'ensemble de données de machine est conforme à un format de données prédéfini et comprend :
des informations d'identification de fabricant d'équipement d'origine, OEM, soit Original Equipment Manufacturer ;
des informations d'état de machine identifiant :
au moins un état de fonctionnement de la machine d'automatisation industrielle ; et
une durée respective de l'au moins un état de fonctionnement ; et
des informations de production idéale identifiant un nombre de pièces que la machine d'automatisation industrielle aurait dû produire pendant un ou plusieurs état(s) de machine productif(s) de l'au moins un état de fonctionnement de la machine d'automatisation industrielle ;
regrouper ou catégoriser ensemble les données de machine pour chaque OEM en utilisant les informations d'identification d'OEM ;
recevoir (410) une demande d'un OEM pour afficher un tableau de bord ;
générer (412) des données de métriques (520) sur la base de l'ensemble de données de machine associées à I'OEM ;
stocker les données de métriques dans un support de stockage lisible par ordinateur ;
générer (414) un tableau de bord de données (500 ; 600) sur la base des données de métriques stockées ; et
délivrer le tableau de bord de données à un dispositif d'affichage d'un dispositif configuré pour communiquer avec le système informatique, où le tableau de bord de données est accessible par I'OEM en utilisant des outils OEM (310).

2. Un ou plusieurs support(s) de stockage lisible(s) par ordinateur de la revendication 1, dans lequel/lesquels les instructions de programme qui ordonnent au système informatique de recevoir l'ensemble de données de machine à partir du dispositif passerelle dans l'environnement d'automatisation industrielle, ordonnent au système informatique de recevoir un premier ensemble de données de machine (332) correspondant à une première machine (110) d'un premier environnement d'automatisation industrielle (326) à partir d'un premier dispositif passerelle (336) ; et
dans lequel/lesquels les instructions de programme ordonnent en outre au système informatique de recevoir un deuxième ensemble de données de machine (334) correspondant à une deuxième machine (112) du premier environnement d'automatisation industrielle à partir du premier dispositif passerelle.

3. Un ou plusieurs support(s) de stockage lisible(s) par ordinateur de la revendication 2, dans lequel/lesquels les instructions de programme ordonnent en outre au système informatique de recevoir un troisième ensemble de données de machine (318) correspondant à une première machine (104) d'un deuxième environnement d'automatisation industrielle (312) à partir d'un deuxième dispositif passerelle (318) ; et
dans lequel/lesquels le premier environnement d'automatisation industrielle est situé dans un emplacement géographique distinct d'un emplacement géographique du deuxième environnement d'automatisation industrielle.

4. Un ou plusieurs support(s) de stockage lisible(s) par ordinateur de la revendication 3, dans lequel/lesquels les instructions de programme ordonnent en outre au système informatique de générer un tableau de bord d'emplacement (500) configuré pour afficher les emplacements géographiques (526) des premier et deuxième environnements d'automatisation industrielle sur une carte (524).

5. Un ou plusieurs support(s) de stockage lisible(s) par ordinateur de l'une des revendications 1 à 4, dans lequel/lesquels les instructions de programme qui ordonnent au système informatique de générer un tableau de bord de données sur la base des données de métriques stockées ordonnent au système informatique de générer le tableau de bord de données comprenant :
un volet chronologique d'états de machine (602) comprenant un historique d'états de fonctionnement de machine ;
un volet d'événements de machine (606) comprenant un historique d'événements de machine ; et
un volet de variables de machine (610) comprenant une pluralité d'identifiants de variables de machine (612) avec des valeurs de variables correspondantes.

6. Un ou plusieurs support(s) de stockage lisible(s) par ordinateur de l'une des revendications 1 à 5, dans lequel/lesquels l'ensemble de données de machine comprend des données de machine organisées selon une structure de données prédéfinie.

7. Un ou plusieurs support(s) de stockage lisible(s) par ordinateur de l'une des revendications 1 à 6, dans lequel/lesquels les instructions de programme qui ordonnent au système informatique de générer des données de métriques ordonnent au système informatique de :
déterminer une métrique de disponibilité de machine sur la base d'un temps d'exécution fonctionnel de la machine d'automatisation industrielle ;
déterminer une métrique de performance de machine sur la base d'un temps de cycle de la machine d'automatisation industrielle ; et
déterminer une métrique de qualité de machine sur la base d'une comparaison du nombre de bonnes pièces produites par la machine d'automatisation industrielle avec le nombre de mauvaises pièces produites par la machine d'automatisation industrielle ; et/ou
dans lequel/lesquels les instructions de programme ordonnent en outre au système informatique de calculer une efficacité globale d'équipement de la machine d'automatisation industrielle sur la base de la métrique de disponibilité de machine, de la métrique de performance de machine et de la métrique de qualité de machine.

8. Procédé de génération d'un tableau de bord (500 ; 600) comprenant des données de machine d'une machine d'automatisation industrielle (104, 106, 110, 112) dans un environnement d'automatisation industrielle (312, 326), le procédé comprenant :
recevoir (406) un ensemble de données de machine (318, 320, 332, 334) à partir d'un dispositif passerelle (322, 324, 336) dans un environnement d'automatisation industrielle (312, 326), les données de machine comprenant des données de fonctionnement d'une machine d'automatisation industrielle (104, 106, 110, 112) contrôlée par au moins un contrôleur (314, 316, 328, 330) de l'environnement d'automatisation industrielle, où l'ensemble de données de machine est conforme à un format de données prédéfini et comprend :
des informations d'identification de fabricant d'équipement d'origine, OEM, soit Original Equipment Manufacturer ;
des informations d'état de machine identifiant :
au moins un état de fonctionnement de la machine d'automatisation industrielle ; et
une durée respective de l'au moins un état de fonctionnement ; et
des informations de production idéale identifiant un nombre de pièces que la machine d'automatisation industrielle aurait dû produire pendant un ou plusieurs état(s) de machine productif(s) de l'au moins un état de fonctionnement de la machine d'automatisation industrielle ;
regrouper ou catégoriser ensemble les données de machine pour chaque OEM en utilisant les informations d'identification d'OEM ;
recevoir (410) une demande d'un OEM pour afficher un tableau de bord ;
générer (412) une pluralité de données de métriques sur la base des données de machine associées à I'OEM ;
stocker la pluralité de données de métriques dans un support de stockage lisible par ordinateur ;
générer (414) un tableau de bord de données (500 ; 600) sur la base de la pluralité de données de métriques stockée ; et
délivrer le tableau de bord de données à un dispositif d'affichage d'un dispositif, où le tableau de bord de données est accessible par I'OEM en utilisant des outils OEM (310).

9. Procédé de la revendication 8, dans lequel la réception de l'ensemble de données de machine à partir du dispositif passerelle dans l'environnement d'automatisation industrielle comprend la réception d'un premier ensemble (332) de données de machine correspondant à une première machine (110) d'un premier environnement d'automatisation industrielle (326) à partir d'un premier dispositif passerelle (336) ; et
comprenant en outre la réception d'un deuxième ensemble de données de machine (334) correspondant à une deuxième machine (112) du premier environnement d'automatisation industrielle à partir du premier dispositif passerelle.

10. Procédé de la revendication 9, comprenant en outre la réception d'un troisième ensemble de données de machine (318) correspondant à une première machine (104) d'un deuxième environnement d'automatisation industrielle (312) à partir d'un deuxième dispositif passerelle (322) ; et
dans lequel le premier environnement d'automatisation industrielle est situé dans un emplacement géographique distinct d'un emplacement géographique du deuxième environnement d'automatisation industrielle ; et/ou
comprenant en outre la génération d'un tableau de bord d'emplacement (500) configuré pour afficher les emplacements géographiques (526) des premier et second environnements d'automatisation industrielle sur une carte (524).

11. Procédé de l'une des revendications 8 à 10, dans lequel la génération du tableau de bord de données sur la base de la pluralité de données de métriques stockée comprend la génération du tableau de bord de données comprenant :
un volet chronologique d'états de machine (604) comprenant un historique d'états de fonctionnement de machine ;
un volet d'événements de machine (606) comprenant un historique d'événements de machine ; et
un volet de variables de machine (610) comprenant une pluralité d'identifiants de variables de machine (612) avec des valeurs de variables correspondantes.

12. Procédé de la revendication 8 à 11, dans lequel l'ensemble de données de machine comprend des données de machine organisées selon une structure de données prédéfinie.

13. Système pour générer un tableau de bord comprenant des données de machine d'un système de machine d'automatisation industrielle dans un environnement d'automatisation industrielle, le système comprenant :
un système informatique (302) d'un service de données analytiques ;
un dispositif passerelle (322, 324, 336) configuré pour :
acquérir (402) des données de machine générées par le système de machine d'automatisation industrielle (104, 106, 110, 112), où les données de machine sont conformes à un format de données prédéfini et comprennent :
des informations d'identification de fabricant d'équipement d'origine, OEM, soit Original Equipment Manufacturer ;
des informations d'état de machine identifiant :
au moins un état de fonctionnement du système de machine d'automatisation industrielle ; et
une durée respective de l'au moins un état de fonctionnement ; et
des informations de production idéale identifiant un nombre de pièces que le système de machine d'automatisation industrielle aurait dû produire pendant un ou plusieurs état(s) de machine productif(s) de l'au moins un état de fonctionnement du système de machine d'automatisation industrielle ;
transmettre (404) les données de machine au système informatique ; et
dans lequel le système informatique comprend :
un support de stockage lisible par ordinateur (304) configuré pour stocker les données de machine ;
un système de processeur (306) configuré pour :
regrouper ou catégoriser ensemble les données de machine pour chaque OEM en utilisant les informations d'identification d'OEM ;
recevoir (410) une demande d'un OEM pour afficher un tableau de bord ;
générer (412) une pluralité de données de métriques sur la base des données de machine associées à I'OEM ; et
stocker les données de métriques dans le support de stockage lisible par ordinateur ; et
un système de tableau de bord (308) configuré pour :
générer (414) un tableau de bord de données (500 ; 600) sur la base des données de métriques stockées ; et
délivrer (416) le tableau de bord de données à un dispositif d'affichage d'un dispositif demandant le tableau de bord de données au système informatique, où le tableau de bord de données est accessible par I'OEM en utilisant des outils OEM (310).

14. Système de la revendication 13, dans lequel le dispositif passerelle est en outre configuré pour organiser les données de machine acquises sur la base d'une structure de données prédéfinie avant de transmettre les données de machine au système informatique ; ou
dans lequel le dispositif passerelle est en outre configuré pour acquérir les données de machine à partir d'un contrôleur industriel (314, 316, 328, 330) de l'environnement d'automatisation industrielle configuré pour contrôler le système de machine d'automatisation industrielle ; ou
dans lequel le dispositif passerelle est en outre configuré pour fournir des services de pare-feu pour bloquer l'accès externe à l'environnement d'automatisation industrielle.

15. Système de la revendication 13 ou 14, dans lequel, pour une machine au sein du système de machine d'automatisation industrielle, le tableau de bord de données comprend :
un volet chronologique d'états de machine (604) comprenant un historique d'états de fonctionnement de la machine ;
un volet d'événements de machine (606) comprenant un historique d'événements de la machine ; et
un volet de variables de machine (610) comprenant une pluralité d'identifiants de variables (612) avec des valeurs de variables correspondantes de la machine ; et/ou
dans lequel le système de processeur est en outre configuré pour calculer une efficacité globale d'équipement de la machine sur la base de :
un temps d'exécution fonctionnel de la machine ;
un temps de cycle de la machine ; et
une comparaison du nombre de bonnes pièces produites par la machine avec le nombre de mauvaises pièces produites par la machine.
